# EUROPEAN PATENT APPLICATION

(11) **EP 2 108 833 A2**
(43) Date of publication of application: **14.10.2009**
(21) Application number: 09250520.5
(22) Date of filing: 26.02.2009
(51) Int. Cl.: F03D 9/00, F03D 11/00

(54) **Systems involving superconducting direct drive generators for wind power applications**

(30) Priority: 06.03.2008 US 43474
(71) Applicant: General Electric Company, Schenectady, NY 12345 (US)
(72) Inventor: Bray, James William, Niskayuna, New York 12309 (US); Laskaris, Evangelos Trifon, Schenectady, New York 12309 (US); Sivasubramaniam, Kiruba, Clifton Park, New York 12065 (US)
(74) Representative: Bedford, Grant Richard

(57) **Abstract**

A system for generating power (100) including a superconducting direct drive wind generator (102) that includes an armature coil (208) constructed of a first superconducting material and a field coil (210) constructed of a second superconducting material, wherein, during operation of the generator (102), the armature coil (208) and the field coil (210) are in electro-magnetic communication and the field coil (210) produces a magnetic field in response to an excitation current flow therethrough that induces an output current flow in the armature coil (208) that generates an electrical power output.

## Description

Various embodiments of the present invention relate generally to superconducting generators, and more particularly to systems involving superconducting direct drive generators for wind power applications.

In this regard, superconducting generators have been made by constructing the generator field coils (which typically carry a substantially direct current) of a superconducting material ("superconductor") instead of the usual copper material. Superconductors are typically lighter in weight and smaller in size (e.g., relative to current carrying capacity) than traditional conductors such as copper and are also more efficient at conducting current (particularly at lower frequencies). Thus, the use of superconductors in wind power applications, such as wind turbine generators, provides benefits such as more efficient performance, lower generator weight, non-gearbox direct drive operation, and lower manufacturing and installation costs. However, superconductors require a very cold operating temperature (e.g., approximately -269 to -196 degrees Celsius or 4 to 77 Kelvin) to be superconducting and, while superconductors have zero resistance when carrying a non-alternating ("DC") current, the resistance increases as the frequency increases when carrying an alternating ("AC") current, which causes losses in the form of heating that counter the foregoing benefits. As a result, the armature coils of superconducting generators (which typically carry a higher frequency AC current) have still been constructed of copper. However, the use of superconductors for armature coils of superconducting generators used in wind power applications is desirable.

Systems involving superconducting direct drive generators for wind power applications include, in an exemplary embodiment, a superconducting direct drive wind generator that includes an armature coil constructed of a first superconducting material and a field coil constructed of a second superconducting material, wherein, during operation of the generator, the armature coil and the field coil are in electro-magnetic communication and the field coil produces a magnetic field in response to an excitation current flow therethrough that induces an output current flow in the armature coil that generates an electrical power output.

Another exemplary embodiment includes a system for generating power including a superconducting generator that includes an armature coil constructed of a first superconducting material and a field coil constructed of a second superconducting material, wherein, during operation of the generator, the armature coil and the field coil are in electro-magnetic communication and the field coil produces a magnetic field in response to an excitation current flow through it which induces an output current flow in the armature coil that generates an electrical power output, and a turbine rotor connected to the generator in a direct drive configuration.

Another exemplary embodiment includes a wind turbine power system including a superconducting generator that includes an armature coil constructed of a superconducting material and attached to a rotor of the generator and a field coil constructed of the superconducting material and attached to a stator of the generator, and a turbine rotor connected in a direct drive configuration to the generator via a shaft connected to the rotor of the generator, wherein a rotation of the turbine rotor rotates the armature coil in a proximity to the field coil which generates an electrical power output from the armature coil when a current is input through the field coil.

Various features, aspects, and advantages of the present invention will become better understood when the following detailed description is read with reference to the accompanying drawings in which like characters represent like parts throughout the drawings, wherein:
FIG. 1 is an illustration of an exemplary wind power system including a superconducting generator in accordance with exemplary embodiments of the invention.
FIG. 2 is an illustration of an exemplary cross sectional view of the superconducting generator from FIG. 1.

In the following detailed description, numerous specific details are set forth in order to provide a thorough understanding of various embodiments. However, the embodiments may be practiced without these specific details. In other instances, well known methods, procedures, and components have not been described in detail.

Further, various operations may be described as multiple discrete steps performed in a manner that is helpful for understanding embodiments of the present invention. However, the order of description should not be construed as to imply that these operations need be performed in the order they are presented, or that they are even order dependent. Moreover, repeated usage of the phrase "in an embodiment" does not necessarily refer to the same embodiment, although it may. Lastly, the terms "comprising," "including," "having," and the like, as used in the present application, are intended to be synonymous unless otherwise indicated.

Superconducting generators (e.g., generators with one or more superconducting components) provide lighter weight, smaller size, and more efficient operation than traditional generators of the same or similar capacity and, thus, are beneficial in wind power applications such as wind turbine systems. Direct drive superconducting generators can operate at a low enough frequency to allow the inclusion of superconducting armature coils in addition to superconducting field coils to provide an even higher degree of the foregoing benefits in wind power applications.

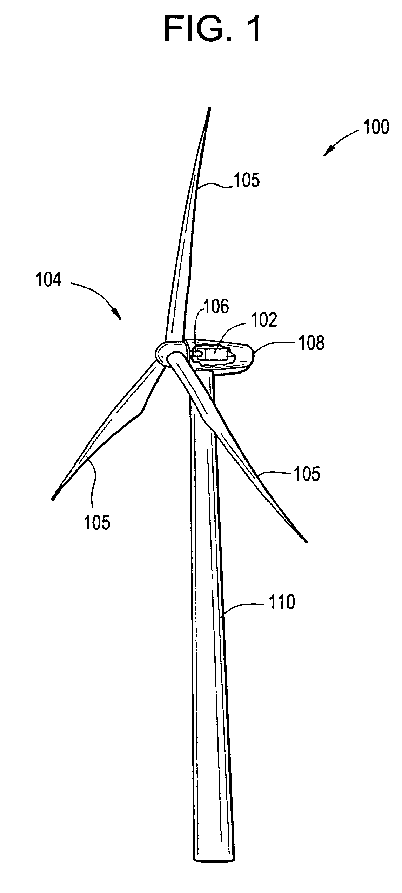

FIG. 1 illustrates an exemplary wind power system 100 that includes a superconducting generator 102 in accordance with exemplary embodiments of the invention. The exemplary system 100 also includes a turbine rotor 104 that includes one or more blades 105. The turbine rotor 104 is connected to the generator 102 in a direct drive configuration. For example, the turbine rotor 104 may be connected to the generator 102 via a shaft 106. The generator 102, one or more portions of the turbine rotor 104, the shaft 106, and other components (not depicted) of the wind power system 100 may be at least partially contained within a housing 108 that may also be referred to in the art as a "nacelle."

The generator 102 and the turbine rotor 104 are supported by a support structure 110, which is a structure capable of supporting these components, e.g., above the ground or other surface. As depicted, the support structure 110 may also support the housing 108, including the components contained therein. Although not depicted, a power carrying conductor (e.g., a cable) can be connected to an output of the generator 102 and extend down the support structure 110 (e.g., internally or externally) to connect to a power grid (e.g., a generation, distribution, and/or transmission system).

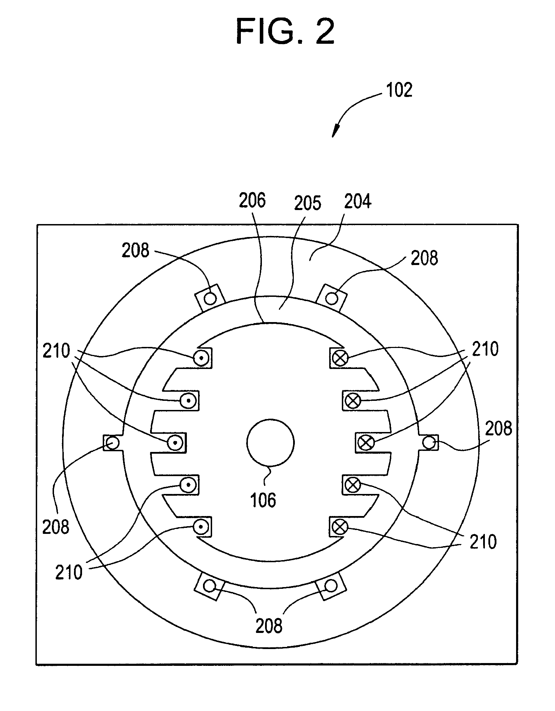

FIG. 2 illustrates an exemplary cross sectional view of the superconducting generator 102 from FIG. 1. As depicted, the generator 102 includes an outer concentric component 204 and an inner concentric component 206. In some embodiments, the outer component 204 may be a stator (i.e., stationary portion) of the generator 102, and the inner component 206 may be a rotor (i.e., rotating portion) of the generator 102 (e.g., in an internal rotor configuration). However, in other embodiments, the outer component 204 may be a rotor of the generator 102, and the inner component 206 may be a stator of the generator 102 (e.g., in an external rotor configuration). A gap (or "air gap") 205 is included between the outer component 204 and inner component 206 and allows movement (e.g., rotation) therebetween. Furthermore, in some embodiments, the shaft 106 may be connected to the inner component 206 as depicted, while in other embodiments, the shaft 106 may be connected to the outer component 204.

The generator 102 also includes a first set of one or more current carrying conductors ("coil(s)") 208 attached to the outer component 204 and a second set of one or more current carrying conductors ("coil(s)") 210 attached to the inner component 206. During operation of the generator 102, these coils 208, 210 are in electro-magnetic communication. In some embodiments, coils 208 may be armature coils of the generator 102, and coils 210 may be field coils of the generator 102. In other embodiments, coils 208 may be field coils of the generator 102, and coils 210 may be armature coils of the generator 102. In such embodiments, the field coil is connected to a source of excitation current (e.g., an "exciter"), which current flow therethrough produces a magnetic field across the field coil, and the armature coil is connected to the output of the generator 102 (e.g., via output terminals) to conduct an output current and electrical power output. Although several coils 208, 210 are depicted, there may be more or less coils 208, 210 and/or windings thereof about the outer component 206 and inner component 208 respectively in various embodiments, e.g., to configure the number of poles of the generator 102 and, thereby, the generating frequency and/or other operating characteristics of the generator 102.

The field coils, e.g., coils 210, are constructed of a superconducting material, such as niobium-titanium (NbTi), niobium-tin (Nb₃Sn), or magnesium-boron (MgB₂). Furthermore, in accordance with exemplary embodiments of the invention, the armature coils, e.g., coils 208, are also constructed of a superconducting material, such as NbTi, Nb₃Sn, or MgB₂, instead of copper as in traditional superconducting generators. In some embodiments, the coils 208, 210 are constructed of different superconducting materials, while in other embodiments they are constructed of the same superconducting material. Furthermore, in some embodiments, the armature coils 208 and/or the field coils 210 may be constructed of a high temperature superconductor (HTS), such as bismuth strontium calcium copper oxide (e.g., BSCCO-2212 or BSCCO-2223) or yttrium barium copper oxide, (e.g., YBa₂Cu₃O₇ or "YBCO").

In an exemplary operation, wind passes over the blades 105 thereby causing the turbine rotor 104 to rotate. This rotation causes a corresponding rotation of the rotor of the generator 102 (e.g., the inner component 206), which may occur, e.g., via the shaft 106, since the generator 102 is connected to the turbine rotor 104 in a direct drive configuration. As a result, the field coil (e.g., coil 210) rotates in proximity to the armature coil (e.g., coil 208). An excitation current that is, e.g., substantially DC (e.g., approximately one hertz or less) is caused to flow through the field coil 210, e.g., via an exciter. The field coil 210 produces a magnetic field in response to this excitation current flow, and the magnetic field induces an output current flow in the armature coil 208 as the field coil 210 is rotated in proximity to the armature coil 208.

The output current flow coupled with the voltage produced across the armature coil 208 generates an electrical power output from the generator 102 to a grid, e.g., via a power cable.

As a direct driven generator 102, the generator 102 is configured to operate at a speed of approximately ten to twenty-five revolutions per minute (rpm) and to induce an armature current with a frequency of approximately one to ten hertz (Hz) (or cycles per second). This low-frequency characteristic allows the use of a superconducting armature coil 208 without countering or negating the benefits of the superconducting materials, e.g., due to heating losses that would occur in traditional wind power system superconducting generators that operate (e.g., gearbox driven) at higher speeds and produce higher frequency armature coil currents.

This written description uses examples to disclose the invention, including the preferred mode, and also to enable practice of the invention, including making and using any devices or systems and performing any incorporated methods. The patentable scope of the invention is defined by the claims, and may include other examples. Such other examples are intended to be within the scope of the claims if they have structural elements that do not differ from the literal language of the claims, or if they include equivalent structural elements with insubstantial differences from the literal languages of the claims.

Various aspects and embodiments of the present invention will now be defined by the following numbered clauses:
1. A superconducting direct drive wind generator, comprising:
   an armature coil comprised of a first superconducting material; and
   a field coil comprised of a second superconducting material;
   wherein, during operation of the generator, the armature coil and the field coil are in electro-magnetic communication and the field coil produces a magnetic field in response to an excitation current flow therethrough that induces an output current flow in the armature coil that generates an electrical power output.
2. The generator of clause 1, wherein the generator is configured to operate at a speed of ten to twenty-five revolutions per minute.
3. The generator of any preceding clause, wherein the armature coil is attached to a stator of the generator and the field coil is attached to a rotor of the generator.
4. The generator of any preceding clause, wherein the armature coil is attached to a rotor of the generator and the field coil is attached to a stator of the generator.
5. The generator of any preceding clause, wherein the first superconducting material is niobium-titanium (NbTi), niobium-tin (Nb₃Sn), or magnesium-boron (MgB₂) and the second superconducting material is NbTi, Nb₃Sn, or MgB₂.
6. The generator of any preceding clause, wherein the first superconducting material is the same as the second superconducting material.
7. The generator of any preceding clause, wherein the first superconducting material is a high temperature superconductor comprising bismuth strontium calcium copper oxide (BSCCO) or yttrium barium copper oxide (YBCO).
8. The generator of any preceding clause, wherein the second superconducting material is a high temperature superconductor comprising bismuth strontium calcium copper oxide (BSCCO) or yttrium barium copper oxide (YBCO).
9. A system for generating power, comprising:
   a superconducting generator, comprising:
      an armature coil comprised of a first superconducting material; and
      a field coil comprised of a second superconducting material;
      wherein, during operation of the generator, the armature coil and the field coil are in electro-magnetic communication and the field coil produces a magnetic field in response to an excitation current flow through it which induces an output current flow in the armature coil that generates an electrical power output; and
   a turbine rotor connected to the generator in a direct drive configuration.
10. The system of clause 9, wherein the generator is configured to induce the output current at a frequency of one to ten hertz (Hz).
11. The system of clause 9 or 10, wherein the turbine rotor is connected to the generator via a shaft.
12. The system of any of clauses 9 to 11, further comprising a support structure that supports the generator and the turbine rotor.
13. The system of any of clauses 9 to 12, wherein the armature coil is attached to a stator of the generator and the field coil is attached to a rotor of the generator.
14. The system of any of clauses 9 to 13, wherein the armature coil is attached to a rotor of the generator and the field coil is attached to a stator of the generator.
15. The system of any of clauses 9 to 14, wherein the first superconducting material is niobium-titanium (NbTi), niobium-tin (Nb₃Sn), or magnesium-boron (MgB₂) and the second superconducting material is NbTi, Nb₃Sn, or MgB₂.
16. The system of any of clauses 9 to 15, wherein the first superconducting material is the same as the second superconducting material.
17. The system of any of clauses 9 to 16, wherein the first superconducting material is a high temperature superconductor comprising bismuth strontium calcium copper oxide (BSCCO) or yttrium barium copper oxide (YBCO).
18. The system of any of clauses 9 to 17, wherein the second superconducting material is a high temperature superconductor comprising bismuth strontium calcium copper oxide (BSCCO) or yttrium barium copper oxide (YBCO).
19. A wind turbine power system, comprising:
   a superconducting generator, comprising:
      an armature coil comprised of a superconducting material and attached to a rotor of the generator; and
      a field coil comprised of the superconducting material and attached to a stator of the generator; and
   a turbine rotor connected in a direct drive configuration to the generator via a shaft connected to the rotor of the generator, wherein a rotation of the turbine rotor rotates the armature coil in a proximity to the field coil which generates an electrical power output from the armature coil when a current is input through the field coil.
20. The system of clause 19, wherein the generator is configured to operate at a speed of ten to twenty-five revolutions per minute.

## Claims

**1.** A system for generating power (100), comprising:
a superconducting direct drive wind generator (102), comprising:
an armature coil (208) comprised of a first superconducting material; and
a field coil (210) comprised of a second superconducting material;
wherein, during operation of the generator (102), the armature coil (208) and the field coil (210) are in electro-magnetic communication and the field coil (210) produces a magnetic field in response to an excitation current flow through it which induces an output current flow in the armature coil (208) that generates an electrical power output.

**2.** The system (100) of claim 1, wherein the generator (102) is configured to operate at a speed of ten to twenty-five revolutions per minute.

**3.** The system (100) of any preceding claim, wherein the generator (102) is configured to induce the output current at a frequency of one to ten hertz (Hz).

**3.** The system (100) of any preceding claim, wherein the armature coil (208) is attached to a stator (204) of the generator (102) and the field coil (210) is attached to a rotor (206) of the generator (102).

**4.** The system (100) of any preceding claim, wherein the armature coil (208) is attached to a rotor (206) of the generator (102) and the field coil (210) is attached to a stator (204) of the generator (102).

**5.** The system (100) of any preceding claim, wherein the first superconducting material is niobium-titanium (NbTi), niobium-tin (Nb₃Sn), or magnesium-boron (MgB₂) and the second superconducting material is NbTi, Nb₃Sn, or MgB₂.

**6.** The system (100) of any preceding claim, wherein the first superconducting material is the same as the second superconducting material.

**7.** The system (100) of any preceding claim, wherein the first superconducting material is a high temperature superconductor comprising bismuth strontium calcium copper oxide (BSCCO) or yttrium barium copper oxide (YBCO).

**8.** The system (100) of any preceding claim, wherein the second superconducting material is a high temperature superconductor comprising bismuth strontium calcium copper oxide (BSCCO) or yttrium barium copper oxide (YBCO).

**9.** The system (100) of any preceding claim, further comprising a turbine rotor (104) connected to the generator (102) in a direct drive configuration.

**10.** The system (100) of claim 9, further comprising a support structure (110) that supports the generator (102) and the turbine rotor (104).
